# FASCICULE DE BREVET EUROPEEN

(11) **EP 1 291 806 B1**
(45) Date de publication et mention de la délivrance du brevet: **27.01.2010**
(21) Numéro de dépôt: 02292167.0
(22) Date de dépôt: 03.09.2002
(51) Int. Cl.: G06K 7/00

(54) **Procédé de lecture d'étiquettes électroniques par identification de leur code**
Verfahren zum Lesen elektronischer Etiketten durch Identifizierung ihrer Koden
Procedure for reading electronic tags by identification of their code

(30) Priorité: 05.09.2001 FR 0111476
(43) Date de publication de la demande: 12.03.2003
(73) Titulaire: COMMISSARIAT A L'ENERGIE ATOMIQUE, 75015 Paris (FR)
(72) Inventeur: Robert, Gérard, 38320 Poisat (FR)
(74) Mandataire: Poulin, Gérard

(56) Documents cités:
- EP-A- 0 696 011
- EP-A- 0 942 386
- EP-A- 1 093 075

## Description

### Domaine technique

L'invention concerne un procédé de lecture d'un ensemble d'étiquettes électroniques comprenant chacune un code d'identification distinct de N bits et situées dans le champ électromagnétique (EM) d'un dispositif interrogateur.

L'invention concerne également un système de lecture d'un ensemble d'étiquettes par un dispositif interrogateur, les étiquettes et le dispositif interrogateur comportant chacun des moyens émetteur/récepteur de signaux, ainsi que des moyens de séquencement et des moyens de mémorisation.

L'invention s'applique, de manière générale, à toute transaction entre un système interrogateur et des systèmes répondeurs (appelés plus simplement « étiquettes »), dont on ne connaît, a priori, ni le nombre, ni les codes d'identification. En particulier, l'invention trouve des applications dans le domaine de la reconnaissance d'individus porteurs de badges, ou de surveillance médicale d'individus porteurs d'implants, ou dans le domaine de la comptabilisation et du contrôle d'objets porteurs d'étiquettes, tel que des bagages dans un aéroport, ou des produits dans une chaîne de production ou encore pour la gestion des stocks de marchandises. L'invention peut s'appliquer, plus particulièrement, à l'inventaire continu du contenu d'un caddie de supermarché, dans lequel l'acheteur peut déposer ou retirer, à tout moment, un ou plusieurs produits.

### Etat de la technique antérieure

De nombreux systèmes et procédés d'identification d'objets porteurs d'étiquettes sont actuellement connus de l'homme de l'art. La plupart d'entre eux s'appliquent à une lecture multiple d'étiquettes, appelée « lecture multiétiquette » et proposent une réémission du code de l'étiquette, après un temps aléatoire propre à chaque étiquette, lorsqu'il y a détection de collision de messages émis simultanément par plusieurs étiquettes.

D'autres procédés consistent à laisser une tranche de temps particulière pour la réponse d'une étiquette, chaque tranche de temps étant déterminée de manière univoque par le code d'identification de chaque étiquette.

Toutefois, ces procédés n'optimisent pas le temps de transaction entre le système interrogateur et l'ensemble des étiquettes. De plus, le temps mis par un tel procédé pour lire la totalité des étiquettes peut ne pas être déterministe, puisqu'il peut être basé sur des tirages de nombres aléatoires, en supplément de l'aléa du nombre d'étiquettes présentes dans le champ EM du dispositif de lecture.

Il existe, par ailleurs, des procédés qui proposent une lecture systématique et déterministe des codes d'identification des étiquettes. L'un de ces procédés est décrit notamment dans la demande de brevet FR-A-2 677 135.

Selon ce procédé, en réponse à un signal de commande du dispositif interrogateur les étiquettes présentes dans le champ EM de ce dispositif interrogateur fournissent leur code d'identification, successivement bit par bit, jusqu'à ce que celui-ci soit entièrement identifié. Lorsqu'une étiquette détecte que le code en cours d'identification est différent du sien, elle s'inhibe momentanément, c'est-à-dire qu'elle devient muette, de sorte que le cycle d'identification continue avec les autres étiquettes, jusqu'à ce qu'il ne reste plus qu'une seule étiquette non inhibée. Le code de cette étiquette est alors identifié. En fin de cycle d'identification, sur une seule commande du dispositif interrogateur, l'étiquette identifiée s'inhibe définitivement et les autres étiquettes lèvent leur inhibition momentanée. La procédure d'identification est ensuite réinitialisée pour identifier une autre étiquette. Ces opérations sont répétées jusqu'à ce que toutes les étiquettes soient identifiées séparément.

Par ailleurs, la demande de brevet FR-A-2 776 094 décrit un procédé destiné à améliorer la technique décrite précédemment en diminuant le temps d'acquisition des codes. Ce procédé propose d'économiser le nombre de messages échangés entre le dispositif interrogateur et les étiquettes en parcourant une arborescence de recherche. Dans ce cas, la détection des codes d'identification des étiquettes se fait successivement, les unes à la suite des autres.

Du fait que dans les procédés décrits ci-dessus l'identification du code d'une étiquette est effectuée bit par bit, de nombreuses émissions de commandes du dispositif interrogateur sont nécessaires pour analyser un code entier d'une étiquette. En outre, ces procédés ne permettent pas d'identifier simultanément les codes de toutes les étiquettes présentes dans le champ électromagnétique du dispositif interrogateur.

L'invention a pour but de remédier aux inconvénients des techniques décrites précédemment en diminuant le nombre de messages émis par le dispositif interrogateur.

Un autre but de l'invention est de fournir plusieurs modes d'analyse des codes des étiquettes tenant compte de l'application envisagée et des contraintes liées à cette application.

### Exposé de l'invention

Ces buts sont atteints au moyen d'un procédé de lecture d'un ensemble d'étiquettes électroniques comprenant chacune un code d'identification distinct de N bits et situées dans le champ électromagnétique d'un dispositif interrogateur.

Le procédé selon l'invention comporte les étapes suivantes :
a) pour chaque code de N bits donné, définir un bloc élémentaire d'analyse comportant m bits, m étant un sous-multiple de N supérieur à 1 ;
b) analyser en parallèle les codes des étiquettes en parcourant ces codes bloc de m bits par bloc de m bits, ladite analyse consistant à répéter les étapes suivantes :
c) attribuer un même numéro d'ordre à toutes les étiquettes ayant le même code partiellement identifié au rang d'analyse courant indiquant le bloc de m bits en cours d'analyse, le nombre de numéros d'ordre attribués représentant le nombre de groupes d'étiquettes ayant le même code partiellement identifié ;
d) établir une table de correspondance entre chaque numéro d'ordre et la valeur du code partiellement identifié.

Selon l'invention, les numéros d'ordre sont consécutifs les uns aux autres.

Selon l'invention, les numéros d'ordre des étiquettes sont mis à jour au fur et à mesure de la détection des bits des codes d'identification.

Selon l'invention, le procédé comporte une étape consistant à vérifier, après identification de toutes les étiquettes présentes dans le champ électromagnétique, les codes identification détectés par un appel de toutes les étiquettes déjà listées.

Selon l'invention, l'appel de toutes les étiquettes déjà listées est effectué au moyen des numéros d'ordre.

Selon l'invention, l'identification d'une étiquette est réalisée selon un mode parallèle dans lequel les blocs de m bits de même rang sont analysés pour toutes les étiquettes.

Selon l'invention, le mode parallèle comporte deux variantes, une première variante, dite mode largeur, dans laquelle l'analyse d'un rang k+1 à partir d'un rang k est effectuée en interrogeant consécutivement chaque numéro d'ordre partiel, et une deuxième variante, dite mode simultané, dans laquelle l'analyse d'un rang k+1 à partir d'un rang k est effectuée en deux phases, soit une première phase dans laquelle toutes les étiquettes de tous les numéros d'ordre indiquent la valeur de leur (k+1)^{iéme} bloc et une deuxième phase dans laquelle le (k+1)^{iéme} bloc est analysé si toutes les étiquettes n'ont pas le même bloc au rang k+1.

L'invention concerne aussi un système de lecture selon la revendication 9.

Lesdits moyens pour analyser chaque étiquette consistent en des algorithmes aptes à fonctionner selon deux modes :
- un mode séquentiel dans lequel les codes des blocs de m bits successifs des étiquettes sont analysés étiquette par étiquette en balayant un arbre de recherche à partir d'un rang de bloc de bits jusqu'au dernier rang de bloc de bits pour chaque code ;
- et un mode parallèle dans lequel les blocs de m bits de même rang sont analysés pour toutes les étiquettes avant d'analyser les blocs de rang suivant.

### Brève description des dessins

- La figure 1 représente un chronogramme illustrant les séquences d'échange d'informations entre le dispositif interrogateur et une étiquette ;
- les figures 2 et 3 représentent le diagramme fonctionnel du procédé respectivement pour un mode séquentiel et selon l'invention pour un mode parallèle ;
- les figures 4 et 5 représentent des exemples de recherche arborescente avec le procédé de l'invention ; et

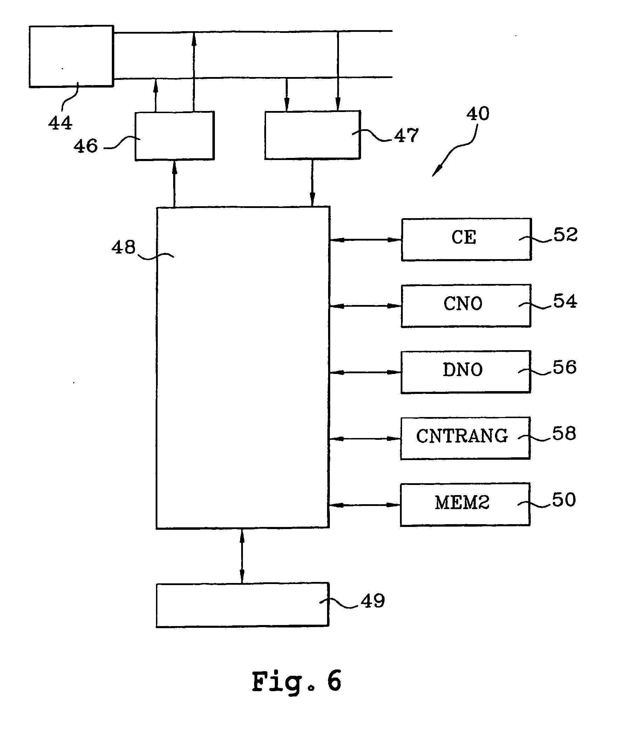

- les figures 6 et 7 représentent schématiquement respectivement un dispositif interrogateur et une étiquette du système de l'invention.

### Exposé détaillé de modes de réalisation particuliers

Le procédé de l'invention consiste en une lecture des codes d'identification d'un ensemble d'étiquettes présentes dans le champ électromagnétique d'un dispositif interrogateur. Dans l'exemple de réalisation qui sera décrit ci-après, les codes d'identification sont binaires, tous différents les uns des autres, et possèdent une même longueur connue. Aussi, dans toute la suite de la description, on considérera que chaque code d'identification d'une étiquette contient N bits, N étant un nombre entier.

Le procédé d'identification des codes des étiquettes se fait, selon l'invention par analyse de blocs successifs de m bits, rang de bloc de m bits par rang de bloc de m bits, en parcourant un arbre de recherche binaire, dont chaque branche représente la valeur d'un bloc de m bits. Deux branches représentant deux blocs ayant au moins un bit différent sont connectées par l'intermédiaire d'un noeud.

L'arborescence de recherche peut être suivie en partant du bloc de bits de plus grande valeur vers le bloc de bits de plus faible valeur, ou inversement, les deux parcours conduisant à deux procédés tout à fait symétriques.

Le procédé de l'invention propose donc de déterminer tous les blocs de bits constituant les codes des étiquettes, rang de bloc de m bits par rang de bloc de m bits, le rang de bloc de m bits étant la position courante du pointeur de blocs de m bits constituant le code d'identification en cours de lecture.

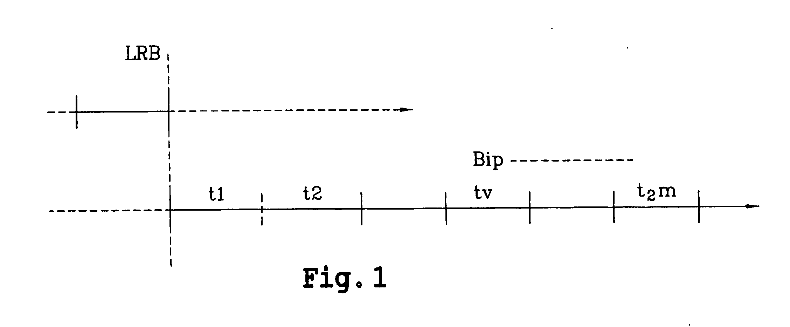

A chaque rang de bloc, les étiquettes analysées émettent la valeur des bits constituant le bloc de ce rang. Pour cela, comme illustré par la figure 1, on définit 2^{m} intervalles de temps contigus.

Les étiquettes émettent un "BIP" dans l'intervalle de temps 2^{v} correspondant à la valeur v du bloc de m bits en cours d'analyse.

Il peut alors se présenter deux cas différents :
- soit un seul des intervalles de temps est occupé et la valeur du bloc de m bits est connue pour le rang k analysé et on peut passer au rang k+1,
- soit plusieurs intervalles de temps sont occupés et il convient soit de sélectionner une valeur et poursuivre l'analyse au rang k+1 dans le mode séquentiel, soit selon l'invention de réattribuer des numéros d'ordre au rang k avant de poursuivre l'analyse au rang k+1 dans le mode parallèle.

En d'autres termes, le procédé de l'invention consiste à parcourir l'arborescence binaire, rang de bloc de m bits par rang de bloc de m bits, afin de déterminer s'il y a une collision de blocs de m bits ou non, c'est-à-dire s'il y a une possibilité de nouveaux codes. Une collision est gérée en attribuant un numéro d'ordre distinct à chaque étiquette ou groupe d'étiquettes ayant le même début de code. Les numéros d'ordre permettent de connaître, à chaque rang de bloc de m bits, le nombre maximum de codes possibles présents à ce rang, en tenant compte de toutes les hypothèses possibles.

Les numéros d'ordre permettent, dans le mode de réalisation préféré de l'invention, de faire l'appel de toutes les étiquettes afin d'éliminer les hypothèses non valides et donc de déterminer la liste réelle des codes d'identification.

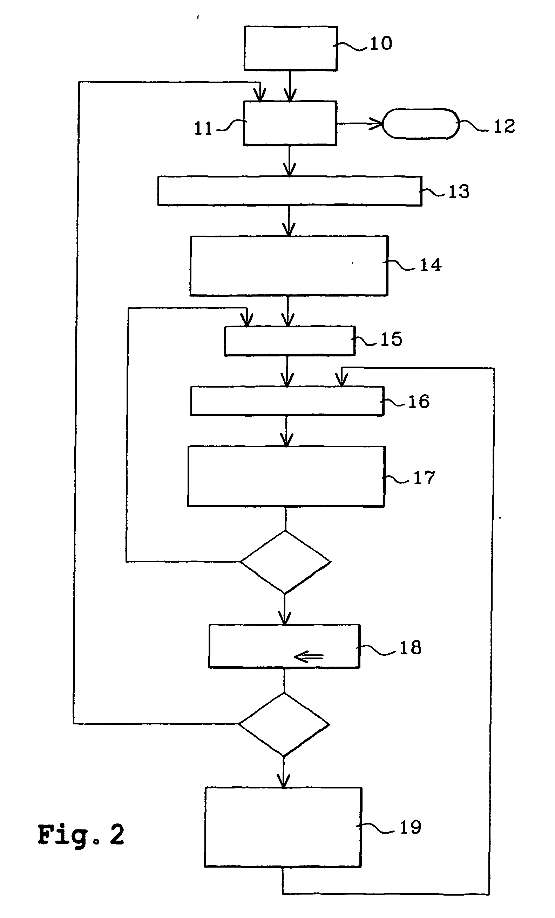

La figure 2 représente un diagramme fonctionnel du procédé pour les modes séquentiels. L'étape 10 est le début du séquencement. Le numéro d'ordre N0 en cours d'analyse est initialisé à -1, toutes les étiquettes présentes dans le champ électromagnétique du lecteur émettent la valeur du premier bloc de m bits de leur identifiant. Une étiquette pénétrant dans le champ électromagnétique après cette étape et avant la fin du cycle d'identification ne participera pas à ce cycle d'identification. Elle restera silencieuse en attendant un nouveau message de début de cycle de lecture.

A l'étape 11, le numéro d'ordre N0 est incrémenté, le rang de bloc de bits est initialisé à zéro. L'étape 13 de lecture de ce premier rang consiste à connaître la ou les valeurs des blocs de m bits de ce premier rang. Plusieurs configurations sont possibles :
- aucune réponse : passage à l'étape 12 "fin d'algorithme",
- au moins une réponse : passage à l'étape 14. L'interrogateur sélectionne parmi les valeurs présentes la branche qui va être analysée, met à jour le code et, si le nombre de valeurs trouvées est supérieur à 1, mémorise qu'il y a plusieurs codes au rang en cours d'analyse.

A l'étape 15, on passe au rang d'analyse suivant : seules les étiquettes appartenant au chemin sélectionné par le lecteur depuis le début d'analyse de l'arbre jusqu'au rang k envoient la valeur du (k+1)^{ième} bloc de m bits.

Les étapes 16 et 17 sont respectivement identiques aux étapes 13 et 14 : seul le numéro de rang analysé est différent. Ces étapes sont effectuées tant que le dernier rang n'a pas été analysé.

L'étape 18 marque la fin d'identification d'une étiquette : le lecteur met à jour la table de correspondance numéro d'ordre ↔ code d'identification, l'étiquette identifiée s'attribue le numéro d'ordre NO en cours.

Si l'algorithme en cours est l'algorithme systématique, l'analyse reprend à l'étape 11 et toutes les étiquettes non identifiées participent à la séquence.

Pour l'algorithme profondeur, on active l'étape 19 où le lecteur recherche dans le registre mémorisation multicode le rang le plus élevé où plusieurs réponses ont été reçues ; il indique aux étiquettes le rang à partir duquel l'analyse recommence ; le numéro d'ordre est incrémenté et dans la table de correspondance il recopie la valeur à l'adresse NO-1 dans l'adresse NO. Le processus passe à l'étape 16 où seules les étiquettes appartenant au chemin sélectionné par le lecteur depuis le rang O jusqu'au rang courant émettent la valeur de leur bloc du rang courant.

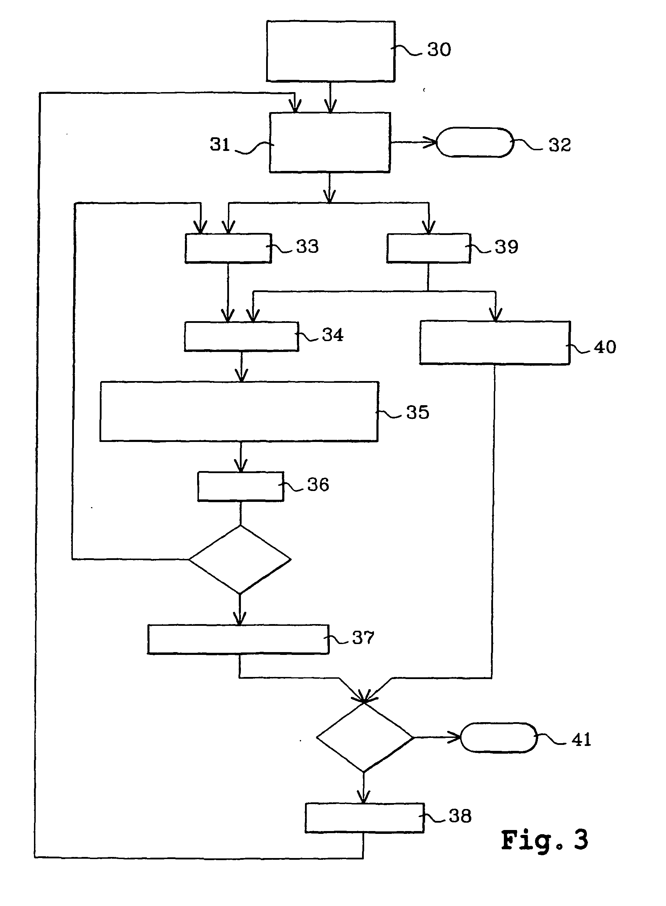

La figure 3 représente un diagramme fonctionnel du procédé de l'invention pour les modes parallèles. L'étape 30 est le début du séquencement : le nombre de numéros d'ordre partiels du rang précédent NO(rang -1) est initialisé à 0, ainsi que le compteur RANG du rang de m bits en cours d'analyse. Toutes les étiquettes présentent dans le champ électromagnétique de l'interrogateur émettent leur premier bloc de m bits. Une étiquette pénétrant dans le champ électromagnétique après cette étape et avant la fin du cycle d'identification ne participera pas à ce cycle d'identification. Elle restera silencieuse en attendant un nouveau message de début de cycle de lecture.

L'étape 31 de lecture de rang consiste à connaître toutes les valeurs des blocs de m bits du rang en cours d'analyse. Dans cette phase, un indice i et les compteurs des numéros d'ordre partiels NO(rang) du rang en cours d'analyse sont initialisés à zéro.

Si aucune étiquette ne répond, la séquence d'analyse se termine à l'étape 32 : fin LM.

Sinon, dans le cas de l'algorithme largeur, l'interrogateur à l'étape 33 indique aux étiquettes les valeurs trouvées dans l'étape 31 et l'algorithme se poursuive à l'étape 34.

Dans le cas de l'algorithme simultané, l'interrogateur dans l'étape 39 confirme les valeurs reçues dans l'étape 31. Si toutes les étiquettes ont émis la même valeur, l'interrogateur émet une commande NB_VBIP=0, met à jour la table de correspondance à l'étape 40 et passe au test "dernier rang". Sinon, l'interrogateur indique pour NB_VBIP≠0 les valeurs reçues et l'algorithme se poursuit par l'étape 34.

Les étapes 34, 35, 36 et 37 sont communs aux deux modes parallèles : elles consistent à analyser successivement tous les numéros d'ordre présents au rang précédent le rang en cours d'analyse.

A l'étape 34, seules les étiquettes ayant le numéro d'ordre i au rang précédent émettent leur valeur.

L'étape 35 est utilisée par l'interrogateur pour mettre à jour le compteur des numéros d'ordre partiels NO(rang) du rang en cours d'analyse, pour mettre à jour la table de correspondance ; par l'émission de la commande VBIP le lecteur indique aux étiquettes les valeurs lues à l'étape 34, et les étiquettes actualisent leur numéro d'ordre partiel pour le rang en cours.

A l'étape 36, on incrémente l'indice i d'analyse des numéros d'ordre du rang précédent. Si tous ces numéros d'ordre n'ont pas été analysés, on passe à l'étape 34. Sinon, le compteur des numéros d'ordre du rang précédent NO(rang-1) est initialisé par NO(rang) dans l'étape 37.

Si le dernier rang a été analysé, le processus s'arrête à l'étape 41 : fin LM. Sinon, le numéro de rang est incrémenté dans l'étape 38 et l'analyse du rang reprend à l'étape 31.

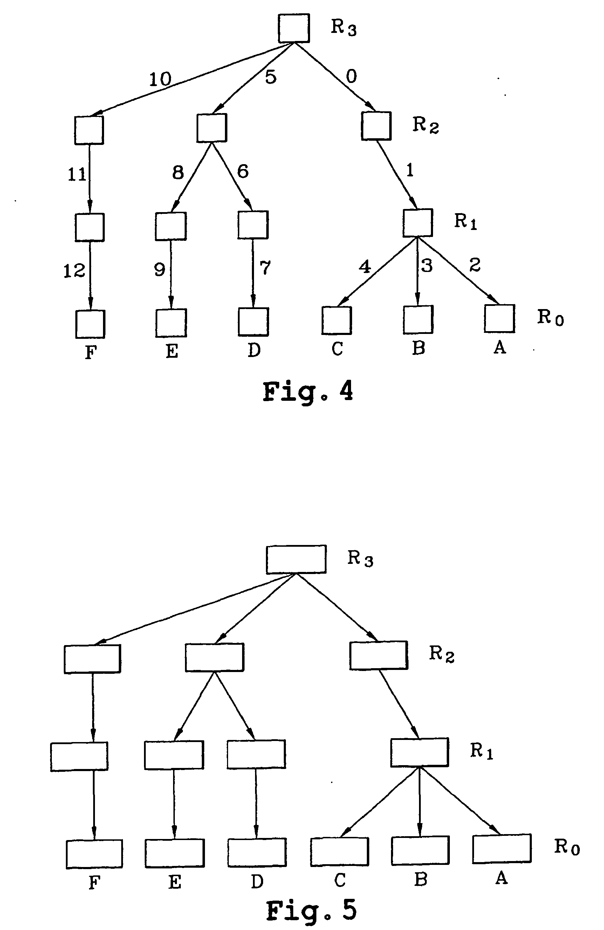

La figure 4 représente un arbre de recherche pour identifier les codes de six étiquettes, A, B, C, D, E et F, comportant chacune N bits.

Dans cet exemple, les blocs de bits comportent chacun 4 bits. Les rangs successifs des blocs de bits sont désignés par les références R0 à R3 où R3 représente le niveau initial de la recherche correspondant à la racine de l'arbre de recherche dans lequel aucun code n'est encore identifié, et le niveau R0 représente le niveau final de la recherche où tous les codes sont identifiés.

L'identification est effectuée étiquette par étiquette en balayant l'arbre du rang R3 jusqu'au rang R0. Les codes sont identifiés quatre bits par quatre bits.

Selon une caractéristique de l'invention, chaque étiquette s'attribue un numéro d'ordre correspondant au nombre d'étiquettes identifiées avant elle. Une table de correspondance entre les numéros d'ordre et les codes d'identification est établie pour assurer un échange rapide entre les étiquettes et l'interrogateur après la phase d'identification.

Le tableau suivant illustre l'évolution des numéros d'ordre pendant la recherche arborescente selon une première variante du mode séquentiel dans laquelle la reprise de l'analyse de l'arbre après identification d'une étiquette s'effectue à partir de la racine.

| Etiquette identifiée | Branche parcourue | Numéro d'ordre attribué |
|---|---|---|
| A | 0-1-2 | 0 |
| B | 0-1-3 | 1 |
| C | 0-1-4 | 2 |
| D | 5-6-7 | 3 |
| E | 5-8-9 | 4 |
| F | 10-11-12 | 5 |

Au rang R3, toutes les étiquettes ont émis leurs premiers blocs. L'interrogateur en sélectionne un. Ainsi, si on veut analyser toutes les étiquettes, on peut choisir, par exemple, selon les valeurs croissantes (ou décroissantes), et si on ne veut pas identifier toutes les étiquettes, mais vérifier uniquement la présence d'une étiquette, on peut imposer la valeur recherchée. Les étiquettes ne présentant pas le bloc sélectionné s'inhibent momentanément. Les autres restent à l'écoute d'une requête de l'interrogateur pour émettre le bloc suivant.

Au rang R2, les étiquettes non inhibées émettent leur deuxième bloc sur requête de l'interrogateur. Ce dernier en sélectionne un et les étiquettes ne présentant pas le deuxième bloc sélectionné s'inhibent momentanément. Les autres restent à l'écoute d'une requête de l'interrogateur pour émettre le bloc suivant. Cette procédure est répétée jusqu'au dernier rang R0 du code de N bits.

Le rang R0 est atteint en parcourant successivement les branches 0-1-2, 0-1-3, et 0-1-4 permettant respectivement l'identification du code complet des étiquettes A, B et C.

Une procédure similaire est exécutée pour identifier les codes des étiquettes D, E et F.

Selon une autre variante du mode séquentiel, la reprise de l'analyse de l'arbre après identification d'une étiquette s'effectue à partir du rang du dernier bloc où des étiquettes partiellement identifiées et identiques se différencient. Au niveau de ce rang, l'arbre d'analyse présente au moins deux branches correspondant à des blocs qui diffèrent par au moins un bit.

Le tableau suivant illustre l'évolution des numéros d'ordre pendant la recherche arborescente selon la deuxième variante du mode séquentiel.

| Etiquette identifiée | Branche parcourue | Numéro d'ordre attribué |
|---|---|---|
| A | 0-1-2 | 0 |
| B | 3 | 1 |
| C | 4 | 2 |
| D | 5-6-7 | 3 |
| E | 8-9 | 4 |
| F | 10-11-12 | 5 |

Comme dans la première variante, au rang R3, toutes les étiquettes ont émis leurs premiers blocs. L'interrogateur en sélectionne un et les étiquettes ne présentant pas le bloc sélectionné s'inhibent momentanément. Les autres restent à l'écoute d'une requête de l'interrogateur pour émettre le bloc suivant.

Au rang R2, les étiquettes non inhibées émettent leurs deuxièmes blocs sur requête de l'interrogateur. Ce dernier en sélectionne un et les étiquettes ne présentant pas ce deuxième bloc s'inhibent momentanément. Les autres restent à l'écoute d'une requête de l'interrogateur pour émettre le bloc de quatre bits suivant. Cette procédure est répétée jusqu'au dernier bloc, c'est-à-dire jusqu'à la lecture d'un code complet de N bits.

Ainsi, le rang R0 est atteint en parcourant successivement les branches 0-1-2, pour identifier l'étiquette A, puis la branche 3 à partir du rang R1 pour identifier l'étiquette B, ensuite la branche 4, partir du rang R1, pour identifier l'étiquette C.

De même, l'identification du code de l'étiquette D est obtenu en parcourant les branches 5-6-7, l'identification du code de l'étiquette E, en parcourant les branches 8-9 à partir du rang R2 et celle de l'étiquette F en parcourant les branches 10-11-12 à partir du rang R0.

La figure 5 représente un arbre de recherche pour identifier les codes de six étiquettes, A, B, C, D, E et F, comportant chacune N bits selon le mode parallèle. Le mode parallèle comporte deux variantes, une première variante, dite mode largeur, dans laquelle l'analyse d'un rang k+1 à partir d'un rang k est effectuée en interrogeant consécutivement chaque numéro d'ordre partiel, et une deuxième variante, dite mode simultané, dans laquelle l'analyse d'un rang n+1 à partir d'un rang k est effectuée en deux phases :
- une première phase dans laquelle toutes les étiquettes de tous les numéros d'ordre indiquent la valeur de leur (k+1)^{iéme} bloc ;
- et une deuxième phase dans laquelle le (k+1)^{iéme} bloc est analysé si toutes les étiquettes n'ont pas le même bloc au rang k+1.

L'exemple de la figure 5 sera utilisé successivement pour décrire un mode largeur_2 dans lequel l'analyse est effectuée par sous-blocs de deux bits, et un mode simultané_4 dans lequel l'analyse est effectuée par sous-blocs de quatre bits.

Dans les deux variantes, une table de correspondance entre les numéros d'ordre et les codes d'identification est établie pour assurer un échange rapide entre les étiquettes et l'interrogateur après la phase d'identification.

L'évolution des numéros d'ordre des étiquettes dans le parcours de l'arbre de la figure 4 est donnée dans le tableau suivant :

| Etiquettes Eₜ | Rang3 | Rang2 | Rang1 | Rang0 |
|---|---|---|---|---|
| Etiquette A | 0 | 0 | 0 | 0 |
| Etiquette B | 0 | 0 | 0 | 1 |
| Etiquette C | 0 | 0 | 0 | 2 |
| Etiquette D | 0 | 1 | 1 | 3 |
| Etiquette E | 0 | 1 | 2 | 4 |
| Etiquette F | 0 | 2 | 3 | 5 |

En désignant par Eₜ(k) la valeur du sous-bloc de rang k d'une étiquette Eₜ, par NO(k) le numéro d'ordre au rang k, et par X les sous-blocs suivants non encore identifiés, l'évolution de la table de correspondance entre les numéros d'ordre NO(k) et les codes d'identification est la suivante:

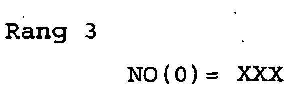

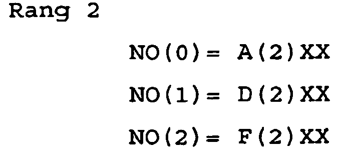

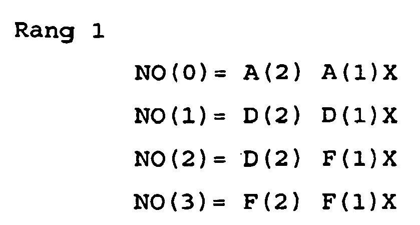

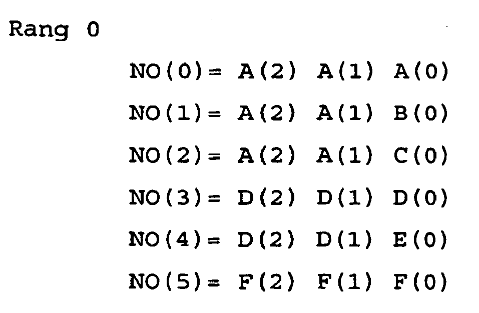

Selon une caractéristique de l'invention, dans la mode largeur la liste de correspondance est actualisée au fur et à mesure de l'identification de blocs de m bits.

Le procédé décrit précédemment est mis en oeuvre par un système comprenant un dispositif interrogateur 40 et des étiquettes 42 comportant des moyens émetteur-récepteur 44 de signaux relié, via des moyens de modulation/démodulation 46, 47, à des moyens de séquencement 48.

Le dispositif interrogateur 40 comporte en outre des moyens pour analyser chaque étiquette 42 bloc de m bits par bloc de m bits, et pour calculer, pour chaque étiquette 42, un numéro d'ordre représentant le nombre de groupes d'étiquettes ayant le même code partiellement identifié de sorte que ledit interrogateur 40 connaisse à tout moment le nombre de groupes d'étiquettes présentes dans le champ électromagnétique, une première mémoire 49 destinée à mémoriser une table de correspondance entre les numéros d'ordre et les codes partiellement identifiés, un premier compteur de rang 58 indiquant le numéro du groupe de bits en cours d'analyse et un deuxième compteur 52 indiquant le nombre d'étiquettes soit totalement identifiées soit partiellement identifiées. Chaque étiquette 42 comporte également des moyens pour calculer les numéros d'ordre, un premier compteur 68 pour compter le rang de blocs de bits en cours d'analyse et une première mémoire 74 pour mémoriser lesdits numéros d'ordre et pour stocker le code d'identification de l'étiquette.

Lesdits moyens pour analyser chaque étiquette sont constitués par des algorithmes fonctionnant selon deux modes :
- un mode séquentiel dans lequel les codes des blocs de m bits successifs des étiquettes sont analysés étiquette par étiquette en balayant un arbre de recherche à partir du premier rang de bloc de bits jusqu'au dernier rang de bloc de bits pour chaque code ;
- et un mode parallèle dans lequel les blocs de m bits de même rang sont analysés simultanément pour toutes les étiquettes.

Le dispositif interrogateur fonctionnant en mode séquentiel profondeur, comporte en outre :
- une deuxième mémoire 50 destinée à mémoriser les noeuds à branches multiples de l'arbre d'analyse dans le mode séquentiel le deuxième compteur d'étiquettes 52 indiquant le nombre d'étiquettes totalement identifiées (ce compteur 52 joue aussi ce rôle dans le mode séquentiel systématique.

Le dispositif interrogateur fonctionnant en mode parallèle, comporte en outre :
- un troisième compteur de numéros d'ordre 54 indiquant le nombre de groupes d'étiquettes identifiées dans le rang d'analyse k+1 ;
- un quatrième compteur de numéros d'ordre 56 indiquant le nombre de numéros d'ordre traités dans le rang d'analyse en cours pour le mode parallèle, le deuxième compteur de numéros d'ordre 52 indiquant le nombre de groupes d'étiquettes ayant le même code partiellement identifié au rang d'analyse k,

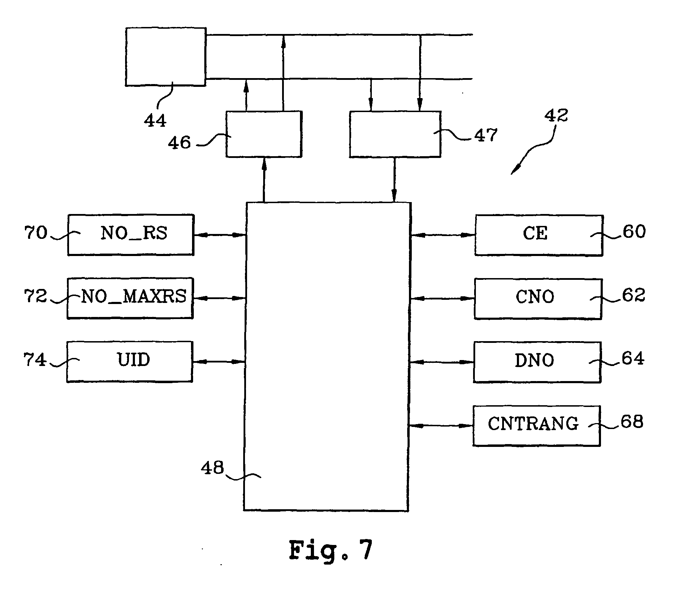

En référence à la figure 7, chaque étiquette 42 fonctionnant en mode séquentiel, comporte en outre un deuxième compteur de numéro d'ordre 60 destiné à compter les étiquettes totalement identifiées, et dans le cas du mode séquentiel profondeur une deuxième mémoire de numéros d'ordre 64 pour mémoriser le numéro du noeud auquel l'étiquette n'a pas été sélectionnée.

Chaque étiquette 42 fonctionnant en mode parallèle, comporte en outre :
- une deuxième mémoire 72 destinée à mémoriser le nombre de groupes ayant un code partiellement identifié identique au rang d'analyse k,
- un deuxième compteur de numéro d'ordre 62 destiné à indiquer le numéro d'ordre en cours d'analyse dans le mode parallèle ;
- une troisième mémoire 70 destinée à mémoriser le numéro d'ordre attribué à une étiquette lors du traitement d'un rang k dans le mode parallèle.

## Revendications

1. Procédé de lecture d'un ensemble d'étiquettes électroniques (42) comprenant chacune un code d'identification distinct de N bits et situées dans le champ électromagnétique d'un dispositif interrogateur (40), **caractérisé en ce qu'**il comporte les étapes suivantes :
a) pour chaque code de N bits donné, définir un bloc élémentaire d'analyse comportant m bits, m étant un sous-multiple de N supérieur à 1 ;
b) analyser en parallèle les codes des étiquettes en parcourant ces codes bloc de m bits par bloc de m bits, ladite analyse consistant à répéter les étapes suivantes :
c) attribuer un même numéro d'ordre à toutes les étiquettes ayant le même code partiellement identifié au rang d'analyse courant indiquant le bloc de m bits en cours d'analyse, le nombre de numéros d'ordre attribués représentant le nombre de groupes d'étiquettes ayant le même code partiellement identifié ;
d) établir une table de correspondance entre chaque numéro d'ordre et la valeur du code partiellement identifié.

2. Procédé selon la revendication 1, **caractérisé en ce que** les numéros d'ordre attribués sont consécutifs les uns aux autres.

3. Procédé selon la revendication 2, **caractérisé en ce que** les numéros d'ordre des étiquettes sont mis à jour au fur et à mesure de la détection des bits des codes d'identification.

4. Procédé selon l'une quelconque des revendications 1 à 3, **caractérisé en ce qu'**il consiste à vérifier, après identification de toutes les étiquettes présentes dans le champ électromagnétique, les codes d'identification détectés par un appel des étiquettes déjà identifiées.

5. Procédé selon la revendication 4, **caractérisé en ce que** l'appel des étiquettes déjà identifiées est effectué au moyen des numéros d'ordre.

6. Procédé selon l'une quelconque des revendications 1 à 5, **caractérisé en ce que** l'identification d'une étiquette est réalisée selon un mode parallèle dans lequel les blocs de m bits de même rang sont analysés pour toutes les étiquettes.

7. Procédé selon la revendication 6, **caractérisé en ce qu'**en mode parallèle, l'analyse d'un rang k+1 à partir d'un rang k est effectuée en interrogeant consécutivement chaque numéro d'ordre.

8. Procédé selon la revendication 6, **caractérisé en ce qu'**en mode parallèle, l'analyse d'un rang k+1 à partir d'un rang k est effectuée en deux phases, soit une première phase dans laquelle toutes les étiquettes de tous les numéros d'ordre indiquent la valeur de leur (k+1)^{iéme} bloc et une deuxième phase dans laquelle le (k+1)^{iéme} bloc est analysé numéro d'ordre par numéro d'ordre si toutes les étiquettes n'ont pas le même bloc au rang k+1.

9. Système de lecture d'un ensemble d'étiquettes (42) par un dispositif interrogateur (40), les étiquettes (42) et le dispositif interrogateur (40) comportant chacun des moyens émetteur-récepteur (44) de signaux reliés via des moyens de modulation/démodulation (46,47) à des moyens de séquencement (48), et chaque étiquette comprenant un code d'identification distinct de N bits, **caractérisé en ce que** le dispositif interrogateur (40) comporte en outre des moyens pour analyser chaque étiquette (42) bloc de m bits par bloc de m bits, m étant un sous-multiple de N supérieur à 1, et pour attribuer un même numéro d'ordre, à toutes les étiquettes ayant le même code partiellement identifié au rang d'analyse courant, le nombre de numéros d'ordre attribués représentant le nombre de groupes d'étiquettes ayant le même code partiellement identifié de sorte que ledit interrogateur (40) connaisse à tout moment le nombre de groupes d'étiquettes présentes dans le champ électromagnétique, et une première mémoire (49) destinée à mémoriser une table de correspondance entre les numéros d'ordre et les codes partiellement identifiés, un premier compteur de rang (58) indiquant le numéro du groupe de bits en cours d'analyse et un deuxième compter (52) indiquant le nombre d'étiquettes soit totalement identifiées, soit partiellement identifiées, et **en ce que** chaque étiquette (42) comporte également des moyens pour calculer les numéros d'ordre, et un premier compteur (68) pour compter les rangs de blocs de bits en cours d'analyse et une première mémoire (74) pour mémoriser lesdits numéros d'ordre et pour stocker le code d'identification de l'étiquette.

10. Système selon la revendication 9, **caractérisé en ce que** lesdits moyens pour analyser chaque étiquette consistent en des algorithmes aptes à fonctionner selon deux modes :
- un mode séquentiel dans lequel les codes des blocs de m bits successifs des étiquettes sont analysés étiquette par étiquette en balayant un arbre de recherche à partir d'un rang de bloc de bits jusqu'au dernier rang de bloc de bits pour chaque code ;
- et un mode parallèle dans lequel les blocs de m bits de même rang sont analysés pour toutes les étiquettes avant d'analyser les blocs de rang suivant.

11. Système selon la revendication 10, **caractérisé en ce que** le dispositif interrogateur fonctionnant en mode séquentiel, chaque étiquette comporte en outre un deuxième compteur (60) d'étiquettes totalement identifiées.

12. Système selon la revendication 10, **caractérisé en ce que** le dispositif interrogateur fonctionnant en mode séquentiel profondeur, comporte en outre une deuxième mémoire (50) destinée à mémoriser les noeuds à branches multiples de l'arbre d'analyse dans le mode séquentiel et **en ce que** chaque étiquette comporte en outre une deuxième mémoire (64) pour mémoriser le numéro du noeud auquel l'étiquette n'a pas été sélectionnée et un deuxième compteur (60) d'étiquettes totalement identifiées.

13. Système selon la revendication 10, **caractérisé en ce que** le dispositif interrogateur fonctionnant en mode parallèle, comporte en outre :
- un troisième compteur de numéros d'ordre (54) indiquant le nombre de groupes d'étiquettes identifiées dans le rang d'analyse k+1 ;
- un quatrième compteur de numéros d'ordre (56) indiquant le nombre de numéros d'ordre traités dans le rang d'analyse en cours pour le mode parallèle ;
et que chaque étiquette (42) comporte
- une deuxième mémoire (72) destinée à mémoriser le nombre de groupes ayant un code partiellement identifié identique au rang d'analyse k,
- un deuxième compteur de numéro d'ordre (62) destiné à indiquer le numéro d'ordre en cours d'analyse dans le mode parallèle ;
- une troisième mémoire (70) destinée à mémoriser le numéro d'ordre attribué à une étiquette lors du traitement d'un rang k dans le mode parallèle.

## Claims

1. Method for reading a set of electronic labels, each comprising a distinct identification code of N bits and situated in the electromagnetic field of an interrogator device, **characterised in that** it comprises the following steps:
(a) for each given code of N bits, defining an elementary analysis block comprising m bits, where m is a sub-unit of N greater than 1,
(b) analysing in parallel the codes of the labels by scrolling through these codes block of m bits by block of m bits, the analysing step consisting in repeating the following steps:
(c) assigning a same serial number to all of the labels with the same partially identified code on the row being analysed indicating the m bits bloc being analysed, the number of serial numbers assigned representing the number of groups of labels with the same partially identified code,
(d) establishing a cross reference table between each serial number and the value of the partially identified code.

2. Method according to claim 1, **characterised in that** the serial numbers assigned are consecutive to each other.

3. Method according to claim 2, **characterised in that** the serial numbers of the labels are updated as the detection of the bits of the identification codes progresses.

4. Method according to any of claims 1 to 3, **characterised in that** it consists in verifying, after all of the labels present in the electromagnetic field have been identified, the identification codes detected by a call of already identified labels.

5. Method according to claim 4, **characterised in that** the call of already identified labels is carried out by means of serial numbers.

6. Method according to any of claims 1 to 5, **characterised in that** the identification of a label is carried out according to a parallel mode in which the blocks of m bits of the same row are analysed for all the labels.

7. Method according to claim 6, **characterised in that** in parallel mode, the analysis of a row k + 1 from a row k is carried out by consecutively interrogating each serial number.

8. Method according to claim 6, **characterised in that** in parallel mode, the analysis of a row k + 1 from a row k is carried out in two phases, i.e. a first phase in which all of the labels of all of the serial numbers indicate the value of their (k + 1)^{th} block and a second phase in which the (k + 1)^{th} block is analysed serial number by serial number if all of the labels do not have the same block at row k + 1.

9. System for reading a set of labels (42) by an interrogator device (40), the labels (42) and the interrogator device (40) each comprising signal emitter/receptor means (44) linked via modulation/demodulation means (46, 47) to sequencing means (48), and each label comprising a distinct identification code of N bits, **characterised in that** the interrogator device (40) further comprises means for analysing each label (42) block of m bits by block of m bits, where m is a sub-unit of N greater than 1, and for assigning a same serial number to all of the labels with the same partially identified code on the row being analysed indicating the m bits bloc being analysed, the number of serial numbers assigned representing the number of groups of labels with the same partially identified code in such a way that said interrogator (40) knows at any moment the number of groups of labels present in the electromagnetic field, and a first memory (49) intended to memorise a cross reference table between the serial numbers and the partially identified codes, a first row counter (58) indicating the number of the group of bits being analysed and a second counter (52) indicating the number of labels either totally identified or partially identified, and **in that** each label (42) also comprises means for calculating the serial numbers, and a first counter (68) to count the rows of blocks of bits currently being analysed and a first memory (74) to memorise said serial numbers and to store the identification code of the label.

10. System according to claim 9, **characterised in that** said means for analysing each label consist in algorithms capable of operating according to two modes:
- a sequential mode, in which the codes of blocks of m successive bits of labels are analysed label by label by scrolling through a search tree from a row of block of bits up to the last row of block of bits for each code,
- and a parallel mode, in which the block of m bits of the same row are analysed for all of the labels before analysing the blocks of the following row.

11. System according to claim 10, **characterised in that** the interrogator device operates in sequential mode, each label moreover comprising a second counter (60) of totally identified labels.

12. System according to claim 10, **characterised in that** the interrogator device operating in deep sequential mode comprises, moreover, a second memory (50) intended to memorise the multiple branch nodes of the analysis tree in the sequential mode and **in that** each label comprises, moreover, a second memory (64) to memorise the number of the node at which the label has not been selected and a second counter (60) of totally identified labels.

13. System according to claim 10, **characterised in that** the interrogator device, operating in parallel mode, moreover comprises:
- a third serial number counter (54), indicating the number of groups of labels identified in the analysis row k+1,
- a fourth serial number counter (56), indicating the number of serial numbers processed in the row being analysed for the parallel mode
and wherein each label (42) comprises:
- a second memory (72) intended to memorise the number of groups with an identical partially identified code at the analysis row k
- a second serial number counter (62) intended to indicate the serial number currently being analysed in the parallel mode
- a third memory (70) intended to memorise the serial number assigned to a label during the processing of a row k in the parallel mode.

## Patentansprüche

1. Verfahren zum Lesen einer Gruppe elektronischer Etiketten (42), von denen jede einen unterschiedlichen N-Bit-Identifikationscode umfasst und die sich in dem elektromagnetischen Feld einer Abfragevorrichtung (40) befinden,
**dadurch gekennzeichnet, dass** es die folgenden Schritte umfasst:
a) Definition, für jeden gegebenen N-Bit-Code, eines m Bits umfassenden elementaren Analysecodes, wobei m ein Divisor von N größer als 1 ist;
b) Parallelanalyse der Etikettencodes, indem man diese Codes m-Bit-Block für m-Bit-Block durchläuft, wobei die genannte Analyse darin besteht, die folgenden Schritte zu wiederholen:
c) Zuteilung einer Ordnungsnummer an alle Etiketten mit demselben partiell identifizierten Code des Rangs der laufenden Analyse, der den gerade analysierten m-Bit-Block angibt, wobei die Anzahl der zugeteilten Ordnungsnummern die Anzahl der Etikettengruppen mit demselben partiell identifizierten Code darstellt;
d) Erstellung einer Tabelle bezüglich der Korrespondenz zwischen jeder Ordnungsnummer und dem Wert des partiell identifizierten Codes.

2. Verfahren nach Anspruch 1, **dadurch gekennzeichnet, dass** die zugeteilten Ordnungsnummern konsekutiv sind.

3. Verfahren nach Anspruch 2, **dadurch gekennzeichnet, dass** die zugeteilten Ordnungsnummern der Etiketten in dem Maße aktualisiert werden, wie die Bits der Identifikationscodes detektiert werden.

4. Verfahren nach einem der Ansprüche 1 bis 3, **dadurch gekennzeichnet, dass** es darin besteht, nach der Identifikation aller in dem elektromagnetischen Feld vorhandenen Etiketten die detektierten Identifikationscodes durch ein Aufrufen der schon identifizierten Etiketten zu verifizieren.

5. Verfahren nach Anspruch 4, **dadurch gekennzeichnet, dass** das Aufrufen der schon identifizierten Etiketten mittels der Ordnungsnummern erfolgt.

6. Verfahren nach einem der Ansprüche 1 bis 5, **dadurch gekennzeichnet, dass** die Identifikation eines Etiketts gemäß einem Parallelmodus erfolgt, bei dem die m-Bit-Blöcke desselben Rangs aller Etiketten analysiert werden.

7. Verfahren nach Anspruch 6, **dadurch gekennzeichnet, dass** beim Parallelmodus die Analyse eines Rangs k+1 ausgehend von einem Rang k erfolgt, wobei man konsekutiv jede Ordnungsnummer abfragt.

8. Verfahren nach Anspruch 6, **dadurch gekennzeichnet, dass** beim Parallelmodus die Analyse eines Rangs k+1, ausgehend von einem Rang k, in zwei Phasen erfolgt, nämlich einer ersten Phase, in der alle Etiketten aller Ordnungsnummern den Wert ihres (k+1)ten Blocks angeben, und einer zweiten Phase, in der der (k+1)te Block Ordnungsnummer für Ordnungsnummer analysiert wird, wenn nicht alle Etiketten den gleichen Block des Rangs k+1 haben.

9. System zum Lesen einer Gruppe von Etiketten (42) mittels einer Abfragevorrichtung (40), wobei die Etiketten (42) und die Abfragevorrichtung (40) jeweils Sende-Empfangseinrichtungen (44) von Signalen umfassen, die über Modulations-/Demodulationseinrichtungen (46, 47) mit Sequenziereinrichtungen (48) verbunden sind, und jedes Etikett einen unterschiedlichen N-Bit-Identifikationscode umfasst,
**dadurch gekennzeichnet, dass** die Abfragevorrichtung (40) außerdem umfasst: Einrichtungen zur Analyse jedes Etiketts (42) m-Bit-Block für m-Bit-Block, wobei m ein Divisor von N größer als 1 ist, und zur Zuteilung einer Ordnungsnummer an alle Etiketten mit demselben partiell identifizierten Code des Rangs der laufenden Analyse, der den gerade analysierten m-Bit-Block angibt, wobei die Anzahl der zugeteilten Ordnungsnummern die Anzahl der Etikettengruppen mit demselben partiell identifizierten Code darstellt, so dass die genannte Abfragevorrichtung zu jedem Zeitpunkt die Anzahl der in dem elektromagnetischen Feld präsenten Etikettengruppen kennt, und einen ersten Speicher (49) zur Speicherung einer Tabelle bezüglich der Korrespondenz zwischen jeder Ordnungsnummer und dem Wert des partiell identifizierten Codes, einen ersten Rangzähler (58), der die Nummer der gerade analysierten Bitgruppe angibt, und einen zweiten Zähler (52) der die Anzahl der entweder total identifizierten oder partiell identifizierten Etiketten angibt, und dadurch, dass jedes Etikett (42) auch Einrichtungen zur Berechung der Ordnungsnummern und einen ersten Zähler (68) zur Zählung der Ränge der gerade analysierten Bitblöcke und einen ersten Speicher (74) zur Einspeicherung der genannten Ordnungsnummern und zur Abspeicherung des Identifikationscodes des Etiketts umfasst.

10. System nach Anspruch 9, **dadurch gekennzeichnet, dass** die genannten Einrichtungen zur Analyse jedes Etiketts aus Algorithmen bestehen, die gemäß zwei Modi arbeiten:
- einem Sequentialmodus, bei dem die Codes der sukzessiven m-Bit-Blöcke der Etiketten Etikett für Etikett analysiert werden, indem man für jeden Code einen Suchbaum von einem Bitblockrang ausgehend bis zum letzten Bitblockrang abtastet;
- und einen Parallelmodus, bei dem die m-Bit-Blöcke desselben Rangs aller Etiketten analysiert werden, bevor man die Blöcke des nächsten Rangs analysiert.

11. System nach Anspruch 10, **dadurch gekennzeichnet, dass** die Abfragevorrichtung im Sequentialmodus arbeitet, wobei jedes Etikett außerdem einen zweiten Zähler (60) für total identifizierte Etiketten umfasst.

12. System nach Anspruch 10, **dadurch gekennzeichnet, dass** die Abfragevorrichtung, die im vertieften Sequentialmodus arbeitet, außerdem einen zweiten Speicher (50) umfasst, dazu bestimmt, die Mehrzweigknoten des Analysebaums in dem Sequentialmodus abzuspeichern, und dadurch, dass jedes Etikett außerdem einen zweiten Speicher (64) zur Speicherung der Nummer des Knotens, bei dem das Etikett nicht selektiert worden ist, und einen zweiten Zähler (60) für total identifizierte Etiketten umfasst.

13. System nach Anspruch 10, **dadurch gekennzeichnet, dass** die im Parallelmodus arbeitende Abfragevorrichtung außerdem umfasst:
- einen dritten Ordnungsnummernzähler (54), der die Gruppennummer identifizierter Etiketten in dem Analyserang k+1 angibt,;
- einen vierten Ordnungsnummernzähler (56), der die Anzahl der verarbeiteten Ordnungsnummern in dem laufenden Analyserang für den Parallelmodus angibt;
und dass jedes Etikett umfasst:
- einen zweiten Speicher (72), bestimmt zur Speicherung der Anzahl von Gruppen mit einem partiell identifizierten Code, identisch mit dem Analyserang k,
- einen zweiten Ordnungsnummernzähler (62), bestimmt zur Anzeige der im Parallelmodus gerade analysierten Ordnungsnummern;
- einen dritten Speicher (70), bestimmt zur Speicherung der einem Etikett während der Verarbeitung eines Rangs k im Parallelmodus zugeteilten Ordnungsnummer.
